# EUROPÄISCHE PATENTANMELDUNG

(11) **EP 4 663 274 A1**
(43) Veröffentlichungstag der Anmeldung: **17.12.2025**
(21) Anmeldenummer: 25179015.0
(22) Anmeldetag: 27.05.2025
(51) Int. Cl.: B01D 53/04, B01D 53/26

(54) **SORPTIONSMODUL, ANLAGE UND VERFAHREN ZUR ABTRENNUNG VON KOHLENSTOFFDIOXID AUS EINEM GASSTROM**

(30) Priorität: 29.05.2024 DE 102024115077
(71) Anmelder: Volkswagen AG, 38440 Wolfsburg (DE)
(72) Erfinder: Hofer, Martin, 38118 Braunschweig (DE); Beger, Frank, 30163 Hannover (DE); Wiegel, Marcel, 39649 Gardelegen / OT Sachau (DE); Heimermann, Christian, 38442 Wolfsburg (DE); Kawelke, Peter, 38442 Wolfsburg (DE)
(74) Vertreter: Gulde & Partner

(57) **Zusammenfassung**

Die Erfindung betrifft ein Sorptionsmodul (30) zur Sorption von Kohlenstoffdioxid aus der Umgebungsluft. Das Sorptionsmodul (30) umfasst ein Gehäuse (32) mit mindestens einer Einlassöffnung (34) und mindestens einer Auslassöffnung (36), einen in dem Gehäuse (32) angeordneten Sorbentbettträger (40), welcher mehrere mit einem Sorbentmaterial (22) gefüllte Sorbentbetten (38) trägt, sowie Verschlussklappen zum Verließen der mindestens einen Einlassöffnung (34) und der mindestens einen Auslassöffnung (36) im Gehäuse (32) des Sorptionsmoduls (30).

Es ist vorgesehen, dass die Verschlussklappe (46) dazu eingerichtet ist, die Anströmung der unterschiedlichen Sorbentbetten (38) in dem Sorptionsmodul (30) zu homogenisieren.

Die Erfindung betrifft ferner eine Anlage (10) und ein Verfahren zur Abtrennung von Kohlenstoffdioxid aus der Umgebungsluft mit einem solchen Sorptionsmodul (30).

## Beschreibung

Die Erfindung betrifft ein Sorptionsmodul zur Abtrennung von Kohlenstoffdioxid aus einem Gasstrom, insbesondere aus einem Luftstrom, eine Anlage zur Abtrennung von Kohlenstoffdioxid aus der Umgebungsluft mit einem solchen Sorptionsmodul sowie ein Verfahren zur Abtrennung von Kohlenstoffdioxid mit einem solchen Sorptionsmodul gemäß dem Oberbegriff der unabhängigen Patentansprüche.

Aus dem Stand der Technik sind Anlagen und Verfahren zum Abscheiden von Kohlenstoffdioxid aus der Umgebungsluft bekannt. Eine solche Abscheidung kann nach dem sogenannten "Direct-Air-Capture-Verfahren" durchgeführt werden, wobei das Kohlenstoffdioxid unmittelbar aus der Umgebungsluft abgeschieden, eingespeichert oder einem weiteren Prozess zugeführt werden kann. Die Abtrennung von Kohlenstoffdioxid aus der Umgebungsluft kann durch unterschiedliche Sorbenten erfolgen. Typischerweise werde zur Abtrennung von Kohlenstoffdioxid Chemisorbenten und/oder Physisorbenten eingesetzt. Amin-basierte Chemisorbenten haben das Problem der Alterung und Degradation, wenn das Material bei Temperaturen größer ca. 60 °C mit Sauerstoff in Verbindung kommt. Dies kann während der Desorptionsphase bei Temperaturen um 100 °C passieren, wenn nicht Gegenmaßnahmen ergriffen werden, wie beispielsweise eine inerte Atmosphäre im System durch den Einsatz von Wasserdampf oder anderen Gasen. Diese Schutzmaßnahmen sind aufwendig und teuer. Physisorbenten, wie beispielsweise Zeolithen, haben das Problem, dass die Affinität des Sorbentmaterials für Wasser(dampf) höher ist als für Kohlenstoffdioxid, wodurch die Umgebungsluft vor der Zufuhr zu einem Adsorptionsraum, in welchem das Zeolithmaterial angeordnet ist, zunächst getrocknet werden muss. Eine solche Trocknung der Luft ist ebenfalls aufwendig und teuer.

Um eine effiziente Abtrennung von Kohlenstoffdioxid aus der Umgebungsluft zu erreichen, werden Anlagen zur Abtrennung von Kohlenstoffdioxid mit erneuerbaren Energien bevorzugt, insbesondere mit Wasserkraft, Windkraft, Geothermie oder Solarenergie betrieben. Ein Betrieb mit Wasserkraft wäre vorteilhaft, da dies kontinuierlich und zuverlässig zur Verfügung gestellt werden kann. Jedoch ist das Potenzial für die Energiegewinnung von Wasserkraft auf entsprechende Flussläufe reduziert und wird schon heute in vielen Regionen nahezu vollständig ausgenutzt, sodass ein Ausweitung der Nutzung von Wasserkraft limitiert ist. Solarenergie und Windkraft können im Wesentlichen ortsunabhängig verwendet werden, die Nutzung ist jedoch durch den Umlauf der Sonne und/oder die Wetterbedingungen am Standort beschränkt.

Nachteilig bei solchen Anlagen ist jedoch, dass die Adsorptions- und Desorptionsprozesse für Kohlenstoffdioxid sowie ein gegebenenfalls der Adsorption vorgeschalteter Trocknungsprozess der Umgebungsluft durch unterschiedliche Rahmenbedingungen, wie beispielsweise die Umgebungstemperatur, die Luftfeuchtigkeit, die Temperatur sowie den Kohlenstoffdioxidgehalt der Umgebungsluft beeinflusst werden.

Ferner können solche Anlagen das Kohlenstoffdioxid aus der Umgebungsluft nur dann effizient adsorbieren, wenn das Sorbentmaterial möglichst vollständig und homogen durchströmt wird. Für eine effiziente Abtrennung von Kohlenstoffdioxid ist es daher hilfreich, wenn eine möglichst große Anströmfläche in einem möglichst kleinen Volumen realisiert werden kann.

Aus der US 2023 / 0073553 A1 ist ein System zur Abtrennung von Kohlenstoffdioxid aus der Umgebungsluft bekannt, bei welchem mehrere, parallel angeordnete zylindrische Adsorptionskammer angeordnet sind, welche jeweils mit einem Zeolithmaterial gefüllt sind.

Die WO 2023 / 159321 A1 beschreibt eine Anlage und ein Verfahren zur Abtrennung von Kohlenstoffdioxid aus der Umgebungsluft. Dabei weist die Anlage eine Trocknungseinheit und eine der Trocknungseinheit in Strömungsrichtung nachgeschaltete Sorptionseinheit auf, in welcher das Kohlenstoffdioxid aus der Umgebungsluft adsorbiert wird.

Ferner beschreibt die US 2020 / 0001225 A1 eine Anlage zur Abtrennung von Kohlenstoffdioxid aus der Umgebungsluft, welche zwei Kammern zur Trocknung von Luft und zwei Kammern zur Adsorption von Kohlenstoffdioxid aufweist. Dabei wird ein Luftstrom zunächst durch eine der Trocknungskammern geführt, um die Umgebungsluft zu trocknen und anschließend aus der getrockneten Umgebungsluft das Kohlenstoffdioxid abgetrennt.

Der Erfindung liegt nun die Aufgabe zugrunde, die Adsorption und darauffolgende Desorption von Kohlenstoffdioxid in einem Sorptionsmodul zu verbessern und dadurch die Effizienz einer Anlage zur Abtrennung von Kohlenstoffdioxid aus der Umgebungsluft zu verbessern.

Die Aufgabe wird durch ein Sorptionsmodul zur Sorption von Kohlenstoffdioxid aus einem Gasstrom, insbesondere aus der Umgebungsluft, gelöst. Das Sorptionsmodul umfasst ein Gehäuse mit mindestens einer Einlassöffnung und mindestens einer Auslassöffnung, einen in dem Gehäuse angeordneten Sorbentbettträger, welcher mehrere mit einem Sorbentmaterial gefüllte Sorbentbetten trägt, sowie Verschlussklappen zum Verschließen der mindestens einen Einlassöffnung und der mindestens einen Auslassöffnung im Gehäuse des Sorptionsmoduls.

Erfindungsgemäß ist vorgesehen, dass das Sorptionsmodul in einem ersten Betriebszustand von einem Gasstrom durchströmt wird, wobei das Kohlenstoffdioxid in dem Sorbentmaterial der Sorbentbetten adsorbiert wird und in einem zweiten Betriebszustand durch die Verschlussklappen verschlossen ist, wobei das Kohlenstoffdioxid desorbiert wird.

Dadurch kann die Effizienz bei der Abtrennung von Kohlenstoffdioxid aus einem Gasstrom verbessert und der Energiebedarf zur Abtrennung verringert werden. Insbesondere kann durch die Adsorption und Desorption in den Sorbentbetten eine gleichmäßige Aufnahme von Kohlenstoffdioxid erreicht werden, sodass eine vorzeitige Sättigung eines Sorbentbettes bei gleichzeitiger geringer Sättigung eines anderen Sorbentbettes vermieden wird.

Durch die in den abhängigen Ansprüchen aufgeführten zusätzlichen Merkmale sind vorteilhafte Verbesserungen und Weiterentwicklungen des im unabhängigen Anspruch genannten Sorptionsmoduls möglich.

In bevorzugter Ausgestaltung der Erfindung ist vorgesehen, dass das Gehäuse als ein zylindrisches Gehäuse oder ein Gehäuse mit einem zylindrischen Abschnitt ausgeführt ist. Ein zylindrisches Gehäuse ist besonders günstig, um einem Unterdruck in der Desorptionsphase standzuhalten. Dabei kann bei einer zylindrischen Form auf weitere Tragstrukturen verzichtet werden, welche bei anderen Geometrien zu einem zusätzlichen Strömungswiderstand führen.

Bevorzugt ist dabei, wenn das zylindrische Gehäuse ein Verhältnis von Länge zu Durchmesser im Bereich von 1,5 zu 1 bis 3 zu 1 aufweist. Eine solche Abmessung hat sich in Versuchen als besonders günstig in Hinblick auf die Anzahl und Größe der Sorbentbetten und die Durchströmung der Sorbentbetten für eine möglichst effiziente Abtrennung von Kohlenstoffdioxid herausgestellt.

Besonders bevorzugt ist dabei, wenn das Gehäuse einen Durchmesser von 1,5 bis 5 m, bevorzugt von 2 bis 3 m, besonders bevorzugt von 2,2 m bis 2,7 m und eine Länge von 2 bis 10 m, vorzugsweise von 3 bis 7 m, besonders bevorzugt von 4 bis 6 m aufweist. Bei diesen Dimensionen ist eine besonders effiziente Abtrennung von Kohlenstoffdioxid bei einem sehr geringen Strömungswiderstand und somit entsprechend günstigen Betriebsparametern möglich.

In einer vorteilhaften Ausgestaltung des Sorptionsmoduls ist vorgesehen, dass die Einlassöffnung an einer ersten Seite einer Mantelfläche des Gehäuses und die Auslassöffnung an einer gegenüberliegenden zweiten Seite der Mantelfläche angeordnet ist. Dadurch wird eine einfache Durchströmung des Sorptionsmodul mit einem geringen Strömungswiderstand erreicht. Dabei werden alle Sorbentbetten im Wesentlichen gleichmäßig angeströmt und es erfolgt eine gleichmäßige Beladung der Sorbentbetten mit Kohlenstoffdioxid.

In einer vorteilhaften Ausgestaltung des Sorptionsmoduls ist vorgesehen, dass das Sorptionsmodul ein Strömungsumlenkelement zur Manipulation eines Gasstroms durch das Sorptionsmodul umfasst, wobei das Strömungsumlenkelement dazu eingerichtet ist, die Anströmung der unterschiedlichen Sorbentbetten in dem Sorptionsmodul zu homogenisieren. Mit anderen Worten ist das Strömungsumlenkelement eingerichtet, eine möglichst gleichmäßige Anströmung der Sorbentbetten zu erzielen. Das Sorptionsmodul ermöglicht somit eine möglichst große Anströmfläche für die Sorptionsbetten bei einem möglichst geringen Anströmungsverlust beziehungsweise Strömungswiderstand beim Durchströmen des Sorptionsmoduls. Dadurch kann die Effizienz bei der Abtrennung von Kohlenstoffdioxid aus einem Gasstrom verbessert und der Energiebedarf zur Abtrennung verringert werden. Insbesondere wird durch die gleichmäßige Anströmung der Sorbentbetten die Aufnahme von Kohlenstoffdioxid aus dem Gasstrom verbessert, sodass die Sorbentbetten gleichmäßig mit Kohlenstoffdioxid beladen werden und nicht ein Sorbentbett bereits gesättigt ist, während ein anderes Sorbentbett nur eine geringe Beladung aufweist.

In einer bevorzugten Ausgestaltung des Sorptionsmoduls ist vorgesehen, dass dem Strömungsumlenkelement ein Klappenträger und mindestens eine schwenkbare Klappe zur Steuerung eines Gasstroms durch das Sorptionsmodul vorgeschaltet ist. Dadurch kann auf einfache Art und Weise ein Verschluss des Sorptionsmoduls erfolgen.

In weiterer bevorzugter Ausgestaltung der Erfindung ist vorgesehen, dass zwischen den Sorbentbetten mit der Einlassöffnung fluidisch verbundene Einlasskanäle ausgebildet sind, welche sich in Strömungsrichtung ausgehend von der Einlassöffnung in Richtung der Ausgangsöffnung verjüngen. Dadurch kann ein gleichmäßiger Gasdurchtritt durch die Sorbentbetten begünstigt werden, wodurch eine besonders effiziente Abtrennung von Kohlenstoffdioxid möglich ist.

Besonders bevorzugt ist dabei, wenn die Einlasskanäle an ihrem der Auslassöffnung zugewandten Ende möglichst vollständig verschlossen sind. Dadurch wird ein Durchtritt durch die Sorbentbetten erzwungen, sodass ein durch das Sorptionsmodul geleiteter Gasstrom nicht nur an der Oberfläche der Sorbentbetten entlangstreift, sondern durch die Sorbentbetten durchtritt und dabei das Kohlenstoffdioxid an oder in dem Sorbentmaterial der Sorbentbetten gebunden wird.

In einer vorteilhaften Ausgestaltung des Sorptionsmoduls ist vorgesehen, dass zwei übereinander liegende Sorbentbetten parallel zueinander angeordnet sind. Dies ermöglicht eine horizontale Ausrichtung der Sorbentbetten, wodurch das Sorbentmaterial als einfache Schüttung in die Sorbentbetten eingebracht werden kann.

Alternativ ist mit Vorteil vorgesehen, dass zwei benachbarte Sorbentbetten in einem Winkel von 2° bis 10°, bevorzugt von 2,5° bis 7,5°, besonders bevorzugt von 3° bis 6° zueinander angeordnet sind. Die leicht schräge Anordnung der Sorbentbetten vereinfacht eine Ausbildung von sich in Strömungsrichtung verjüngenden Einlasskanälen und sich in Strömungsrichtung erweiternden Auslasskanälen zwischen den Sorbentbetten, wodurch ein gleichmäßiger Durchtritt des Gasstroms durch das Sorbentbett begünstigt wird.

In einer weiteren vorteilhaften Ausgestaltung des Sorptionsmoduls ist vorgesehen, dass in einem Randbereich des Gehäuses ein Füllelement angeordnet ist, welches ein Einströmen von Gas in den Randbereich des Gehäuses unterbindet. Dadurch kann ein Schadvolumen im Sorptionsmodul minimiert werden, in welchem keine Adsorption und/oder Desorption von Kohlenstoffdioxid erfolgt. Dadurch kann das Verhältnis von Sorbentvolumen zu Gesamtvolumen des Sorptionsmoduls erhöht und die Effizienz des Sorptionsmoduls verbessert werden.

In einer bevorzugten Ausführungsform des Sorptionsmoduls ist vorgesehen, dass der Sorbentbettträger eine Höhe aufweist, welche dem einfachen bis zweifachen, bevorzugt dem 1,2-fachen bis 1,8-fachen, besonders bevorzugt dem 1,3-fachen bis 1,7-fachen seiner Breite entspricht. Bei einem solchen Verhältnis von Höhe zu Breite des Sorbentbettträgers stellen sich besonders günstige Strömungsverhältnisse in Hinblick auf die Homogenität der Durchströmung der Sorbentbetten sowie den Druckverlust beziehungsweise Strömungswiderstand bei der Durchströmung des Sorptionsmoduls ein.

In einer bevorzugten Ausgestaltung des Sorptionsmoduls ist vorgesehen, dass das Sorbentmaterial kugelförmig ist und als Schüttung in den Sorbentbetten vorliegt. Dadurch kann das Sorbentmaterial besonders einfach und kostengünstig in ein Sorbentbett eingebracht werden. Durch die Kugelform wird zudem sichergestellt, dass sich das Sorbentmaterial gleichmäßig in den Sorbentbetten verteilt und somit eine möglichst homogene Schüttung in den Sorbentbetten erreicht wird.

Besonders bevorzugt ist dabei, wenn die Schüttung durch ein Fixierungsmittel in oder an dem Sorbentbett fixiert ist. Insbesondere bei einer geplanten Schrägstellung der Sorbentbetten ist es vorteilhaft, wenn die Schüttung durch ein Fixierungsmittel in oder an dem Sorbentbett fixiert wird, um zu verhindern, dass bei der Schrägstellung Sorbentmaterial aus dem Sorbentbett fällt. Ferner ist es vorteilhaft, das Sorbentmaterial in oder an dem Sorbentbett zu fixieren, um bei einem Durchtritt des Gasstroms durch das Sorbentmaterial ein Wegblasen des Sorbentmaterials zu verhindern.

Ein weiterer Teilaspekt der Erfindung betrifft eine Anlage zur Abtrennung von Kohlenstoffdioxid aus der Umgebungsluft. Die Anlage umfasst eine Trocknungseinheit, eine Sorptionseinheit sowie ein Förderelement zur Förderung eines Gasstroms, insbesondere eines Luftstroms, durch die Anlage, wobei die Sorptionseinheit ein oder bevorzugt mehrere in den vorhergehenden Abschnitten beschriebene Sorptionsmodule aufweist. Eine solche Anlage ermöglicht eine besonders effiziente Abtrennung von Kohlenstoffdioxid aus einem Gasstrom, da in dem Sorptionsmodul eine besonders effiziente Abtrennung von Kohlenstoffdioxid erfolgt.

Die Anlage kann zusätzlich eine Speichereinheit zur Aufnahme des abgetrennten Kohlenstoffdioxids umfassen, um den in der Sorptionseinheit abgetrennten Kohlenstoffdioxid zu speichern. Alternativ kann das abgetrennte Kohlenstoffdioxid auch in einem nachfolgenden Prozessschritt weiterverarbeitet werden.

Ein weiterer Teilaspekt der Erfindung betrifft ein Verfahren zur Abtrennung von Kohlenstoffdioxid aus einem Gasstrom, insbesondere aus einem Luftstrom von Umgebungsluft, mit einem in den vorhergehenden Abschnitten beschriebenen Sorptionsmodul, welches folgende Schritte umfasst:
- Leiten eines Gasstroms durch eine Einlassöffnung in das Gehäuse des Sorptionsmoduls,
- Adsorbieren des in dem Gasstrom enthaltenen Kohlenstoffdioxids,
- Schließen der Verschlussklappen im Gehäuse des Sorptionsmoduls, und
- Desorbieren des in dem Sorbentmaterial gebundenen Kohlenstoffdioxids.

Das Verfahren ermöglicht eine möglichst effiziente Abtrennung von Kohlenstoffdioxid, da möglichst große Anströmflächen für die Sorptionsbetten bei einem möglichst geringen Anströmungsverlust beziehungsweise Strömungswiderstand beim Durchströmen des Sorptionsmoduls realisiert werden können. Dadurch kann die Effizienz bei der Abtrennung von Kohlenstoffdioxid aus einem Gasstrom verbessert und der Energiebedarf zur Abtrennung verringert werden. Insbesondere wird durch die gleichmäßige Anströmung der Sorbentbetten die Aufnahme von Kohlenstoffdioxid aus dem Gasstrom verbessert, sodass die Sorbentbetten gleichmäßig mit Kohlenstoffdioxid beladen werden und nicht ein Sorbentbett bereits gesättigt ist, während ein anderes Sorbentbett nur eine geringe Beladung aufweist.

In einer vorteilhaften Ausgestaltung des Verfahrens ist vorgesehen, dass der Gasstrom durch das Sorptionsmodul manipuliert wird. Dabei wird der Gasstrom derart abgelenkt und/oder aufgeteilt, dass eine möglichst gleichmäßige Durchströmung der Sorbentbetten erreicht wird.

In einer vorteilhaften Ausgestaltung des Verfahrens ist vorgesehen, dass ein Gasstrom, insbesondere ein Luftstrom von einer Unterseite zu einer Oberseite oder von einer Oberseite zu einer Unterseite durch ein Sorbentbett geleitet wird. Durch einen Gasdurchtritt durch das Sorbentbett wird eine besonders effiziente Abtrennung von Kohlenstoffdioxid erreicht, wodurch die Ausbeute an Kohlenstoffdioxid erhöht und die Energieeffizienz der Anlage verbessert wird.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine Anlage zur Abtrennung von Kohlenstoffdioxid mit einem erfindungsgemäßen Sorptionsmodul,
- Figur 2: eine bevorzugte Ausgestaltung eines erfindungsgemäßen Sorptionsmoduls in einer dreidimensionalen Darstellung,
- Figur 3: weitere bevorzugte Ausgestaltungen eines erfindungsgemäßen Sorptionsmoduls,
- Figur 4: einen Schnitt durch ein erfindungsgemäßes Sorptionsmodul,
- Figur 5: ein bevorzugtes Ausführungsbeispiel für einen Sorbentbettträger mit mehreren Sorbentbetten sowie Einlass- und Auslasskanälen,
- Figur 6: ein weiteres bevorzugtes Ausführungsbeispiel für einen Sorbentbettträger mit mehreren Sorbentbetten,
- Figur 7: eine schematische Darstellung einer Verschlussklappe mit einem Klappenträger zum Verschließen einer Einlassöffnung oder Auslassöffnung eines Gehäuses des Sorptionsmoduls,
- Figur 8: einen weiteren Schnitt durch ein erfindungsgemäßes Sorptionsmodul, und
- Figur 9: ein Ablaufdiagramm zur Durchführung eines erfindungsgemäßen Verfahren zur Abtrennung von Kohlenstoffdioxid aus einem Gasstrom mit einem solchen Sorptionsmodul.

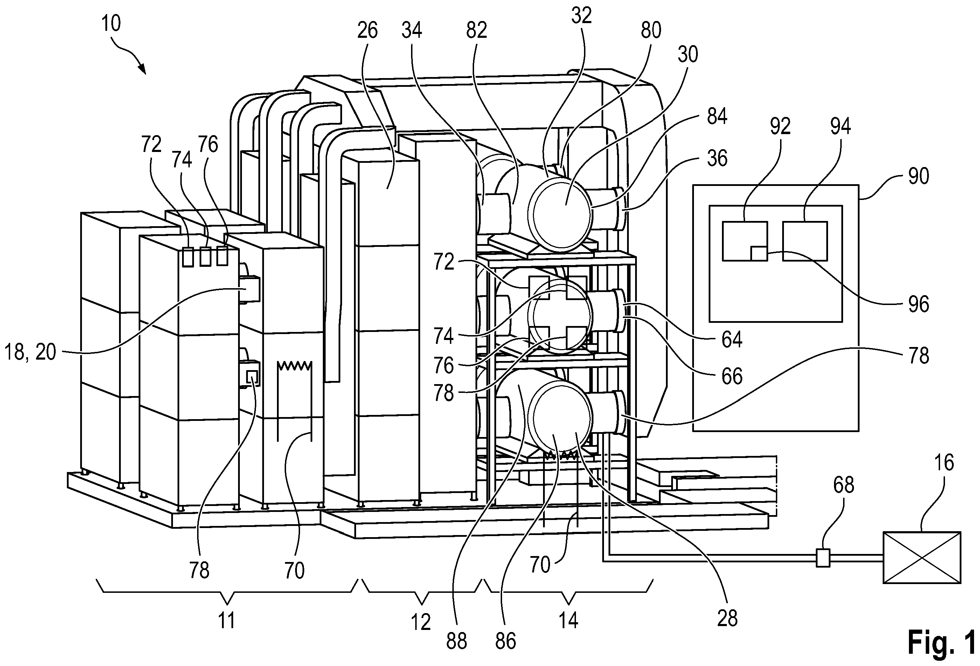

Figur 1 zeigt eine Anlage 10 zur Abtrennung von Kohlenstoffdioxid aus einem Gasstrom, insbesondere aus der Umgebungsluft. Dabei wird der Anlage 10 ein Gasstrom zugeführt, welcher eine gewisse Restfeuchte aufweist und diesem Gasstrom wird Kohlenstoffdioxid und Wasser entzogen. Aus der Anlage 10 strömt ein Abluftstrom aus, welcher gegenüber der einströmenden Gas ein teilweise getrocknetes, kohlenstoffdioxid-reduziertes Gas aufweist. Die Anlage 10 umfasst eine Vorkonditionierungseinheit 11, in welcher ein Gasstrom gefiltert und vorgetrocknet wird. Dazu enthält die Vorkonditionierungseinheit 11 mindestens eine Filtereinheit und eine Trocknungseinheit, um einen Gasstrom für die weitere Verarbeitung in der Anlage 10 aufzubereiten. Ferner enthält die Vorkonditionierungseinheit 11, ein Förderelement 18, insbesondere ein Gebläse 20, um einen solchen Gasstrom zu erzeugen und die Umgebungsluft durch die Anlage 10 zu fördern.

Die Anlage 10 umfasst ferner eine Trocknungseinheit 12, in welcher dem Gasstrom die enthaltene Restfeuchte zumindest teilweise entzogen wird. Als Trocknungsmittel für die Trocknungseinheit 12 kann beispielsweise ein hydrophiles Material wie Silica-Gel verwendet werden. Prinzipiell kann jedes Trocknungsmaterial verwendet werden, welches dazu geeignet ist, Feuchtigkeit aus der Luft aufzunehmen. Insbesondere kann in der Trocknungseinheit 12 auch ein Sorbentmaterial 22, insbesondere ein Physisorbent 23, als Trocknungsmittel vorgesehen sein. Bevorzugt wird ein Trocknungsmittel verwendet, welches durch eine entsprechende Prozessführung nach der Aufnahme der Luftfeuchte wieder regeneriert und somit erneut dem Prozess zur Verfügung steht. Dabei wird ein Trocknungsgrad des Gasstroms angestrebt, bei welchem die Restfeuchte der Luft einen Taupunkt von maximal -30 °C, vorzugsweise -50 °C, besonders bevorzugt maximal -60 °C Taupunkt beträgt.

Die Anlage 10 umfasst ferner eine Sorptionseinheit 14, in welcher das Kohlenstoffdioxid aus dem Gasstrom, insbesondere aus der Umgebungsluft, gebunden wird. Dabei wird das sich in dem getrockneten Gasstrom befindliche Kohlenstoffdioxid in einem Sorbentmaterial 22, insbesondere in einem Physisorbenten 23, besonders bevorzugt in einem Zeolithmaterial 24 eingespeichert. Die Sorptionseinheit 14 umfasst einen oder mehrere Sorptionsmodule 30, welche jeweils ein zylindrisches Gehäuse 32 aufweisen. Alternativ können die Sorptionsmodule 30 auch von einer Zylinderform abweichende Geometrien aufweisen. Das Gehäuse 32 weist eine Mantelfläche 80 auf, wobei an einer ersten Seite 82 der Mantelfläche 80 mindestens eine Einlassöffnung 34 und an einer der ersten Seite 82 gegenüberliegenden zweiten Seite 84 der Mantelfläche 80 mindestens eine Auslassöffnung 36 ausgebildet ist.

Darüber hinaus weist die Anlage 10 eine Speichereinheit 16 auf, in welcher das in der Sorptionseinheit 14 aus dem Gasstrom abgetrennte Kohlenstoffdioxid in konzentrierter Form eingespeichert wird. Die Anlage 10 umfasst ferner ein Förderelement, insbesondere ein Gebläse, mit welchem ein Gasstrom, insbesondere ein Luftstrom, durch die Trocknungseinheit und anschließend durch die Sorptionseinheit 14 geführt wird.

Die Trocknung des Gasstroms erfolgt vorzugsweise in einem ersten Prozessraum 26, welcher durch Verschlusselemente, insbesondere durch Verschlussklappen 46, 64, im Wesentlichen gasdicht von der Umgebung abgetrennt werden kann. Dabei weist der erste Prozessraum 26 in dem dargestellten Ausführungsbeispiel eine Einlassklappe 46 und eine Auslassklappe 64 auf. In dem ersten Prozessraum 26 kann ein Heizelement 70 angeordnet sein, um die Temperatur des Trocknungsmaterials in der Trocknungseinheit 12 beziehungsweise im ersten Prozessraum 26 zu manipulieren. In dem ersten Prozessraum 26 beziehungsweise in der Trocknungseinheit 12 können ferner Sensoren 72, 74, 76, 78, 79 zur Erfassung einer Temperatur, eines Drucks, einer Kohlenstoffdioxidkonzentration, einer Strömungsgeschwindigkeit und/oder einer relativen oder absoluten Feuchte des Gasstroms angeordnet sein.

Die Adsorption und anschließende Desorption von Kohlenstoffdioxid erfolgt vorzugsweise in einem zweiten Prozessraum 28, welcher durch Verschlusselemente 46, 64, insbesondere durch Klappen 46, 64 im Wesentlichen gasdicht von der Umgebung abgetrennt werden kann. Ferner weist der zweite Prozessraum 28 ein Heizelement 70, insbesondere einen Wärmetauscher auf, um die Temperatur insbesondere beim Desorptionsprozess entsprechend anheben zu können und das im Sorptionsmaterial 22 adsorbierte Kohlenstoffdioxid wieder freizusetzen. An dem zweiten Prozessraum 28, beziehungsweise an der Sorptionseinheit 14, kann eine Unterdruckpumpe 68 vorgesehen sein, um den Luftdruck in dem zweiten Prozessraum 28 oder einer Gasleitung, welche den zweiten Prozessraum 28 mit der Speichereinheit 16 verbindet, zu manipulieren und insbesondere während eines Desorptionsprozesses abzusenken. Der zweite Prozessraum 28 ist fluidisch mit der Speichereinheit 16 verbunden, in welcher das aus der Umgebungsluft abgetrennte Kohlenstoffdioxid eingelagert werden kann. In dem zweiten Prozessraum 28, beziehungsweise in der Sorptionseinheit 14, sind ein Temperatursensor 72, ein Drucksensor 74, ein Luftfeuchtigkeitssensor 79, ein Sensor zur Erfassung der Kohlenstoffdioxidkonzentration 76, ein Sensor 78 zur Erfassung der Strömungsgeschwindigkeit, ein Massenstromsensor und/oder ein Volumenstromsensor, angeordnet.

In die Vorkonditionierungseinheit 11 ist ein Förderelement 18, insbesondere ein Gebläse 20 integriert, um einen Gasstrom, insbesondere einen Luftstrom der Umgebungsluft zunächst durch Vorkonditionierungseinheit, anschließend durch die Trocknungseinheit 12 und dann durch die Sorptionseinheit 14 zu fördern. Das Förderelement 18 weist eine Antriebseinheit auf, deren Leistung über eine Leistungsregelung entsprechend angepasst werden kann. Alternativ kann das Förderelement auch an anderen Positionen in der Anlage 10, insbesondere in einem Kanal zur Zuführung der Luft zu der Anlage 10 oder einem Kanal zur Abführung der Luft aus der Anlage 10 angeordnet sein.

Die Anlage 10 wird vorzugsweise aus erneuerbaren Energien wie Windkraft oder Solarenergie mit Strom versorgt, um beim Betrieb keine zusätzlichen Kohlenstoffdioxidemissionen zu erzeugen. Dazu ist eine Windkraftanlage und/oder eine Solaranlage, insbesondere eine Solarthermieanlage oder eine Photovoltaikanlage, vorgesehen, um die Anlage mit erneuerbarer Energie zu versorgen.

Die Anlage 10 weist ferner eine Steuerungseinheit 90 mit einer Speichereinheit 92 und einer Recheneinheit 94 auf, wobei in der Speichereinheit 92 ein Computerprogrammcode 96 abgelegt ist, welcher dazu eingerichtet ist, bei Ausführung durch die Recheneinheit 94 der Steuerungseinheit 90 den Betrieb der Anlage 10 zur Abtrennung von Kohlenstoffdioxid aus dem Gasstrom, insbesondere aus der Umgebungsluft, zu steuern. Die Steuerungseinheit 90 kann über eine Datenverbindung mit einem Datenzentrum in Verbindung stehen, welches der Anlage 10 Daten zur Steuerung der Anlage 10 zur Verfügung stellt oder mit dieser austauscht.

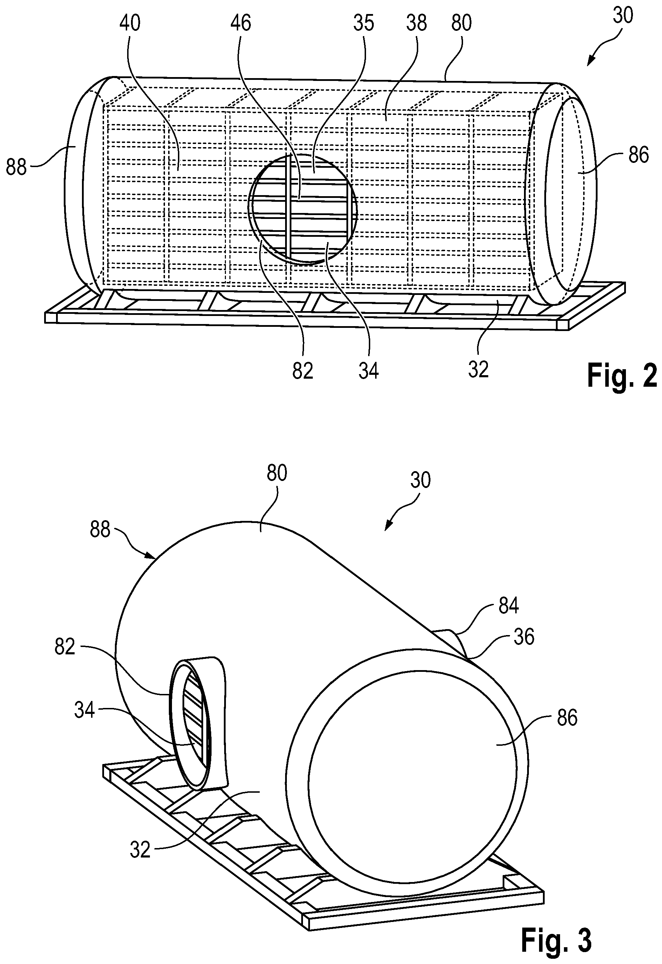

Figur 2 zeigt eine bevorzugte Ausgestaltung eines erfindungsgemäßen Sorptionsmoduls 30 in einer dreidimensionalen Darstellung. Dabei weist das Sorptionsmodul 30 ein zylindrisches Gehäuse 32 mit einer Mantelfläche 80, einer ersten Stirnfläche 86 und einer der ersten Stirnfläche 86 gegenüberliegenden zweiten Stirnfläche 88 auf. An einer ersten Seite 82 der Mantelfläche 80 ist eine Einlassöffnung 34 ausgebildet, durch welche ein Gasstrom in das Gehäuse 32 des Sorptionsmoduls eintreten kann. An der Einlassöffnung 34 kann ein Strömungsumlenkelement 47 vorgesehen sein, mit welchem ein Gasstrom durch das Sorptionsmodul 30 umgelenkt und/oder aufgeteilt werden kann, um eine möglichst gleichmäßige Anströmung der unterschiedlichen Sorbentbetten 38 in dem Sorptionsmodul 30 zu erreichen.

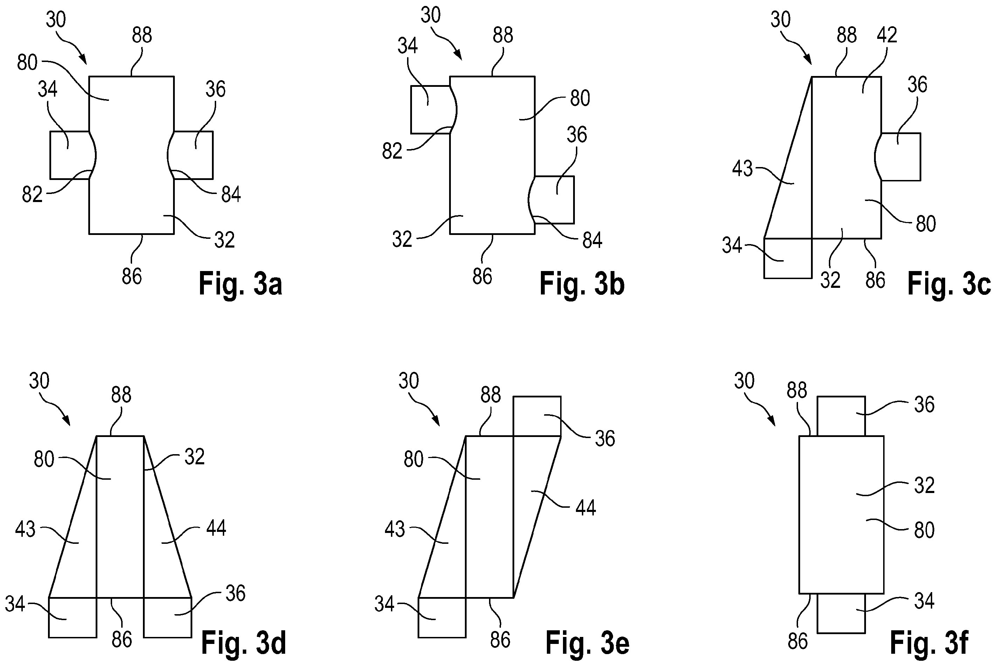

Die Figuren 3a bis 3f zeigen unterschiedliche Ausführungsbeispiele für ein erfindungsgemäßes Sorptionsmodul 30. Dabei ist in Figur 3a ein Sorptionsmodul 30 mit jeweils einer Einlassöffnung 34 und einer Auslassöffnung 36 dargestellt, welche an gegenüberliegenden Seiten 82, 84 einer Mantelfläche eines zylindrischen Gehäuses 32 des Sorptionsmoduls 30 angeordnet sind. Dabei ist die Einlassöffnung 34 und die Auslassöffnung 36 fluchtend zueinander und mittig an gegenüberliegenden Seiten 82, 84 der Mantelfläche 80 angeordnet.

In Figur 3b ist ein Sorptionsmodul 30 mit jeweils einer Einlassöffnung 34 und einer Auslassöffnung 36 dargestellt, welche an gegenüberliegenden Seiten 82, 84 einer Mantelfläche 80 eines zylindrischen Gehäuses 32 des Sorptionsmoduls 30 angeordnet sind. Dabei sind die Einlassöffnung 34 und die Auslassöffnung 36 diagonal versetzt zueinander an gegenüberliegenden Seiten 82, 84 der Mantelfläche 80 angeordnet.

In Figur 3c ist ein Sorptionsmodul 30 dargestellt, welches ein Gehäuse 32 mit einem zylindrischen Teil 42 sowie einem dem zylindrischen Teil 42 vorgeschalteten Einlassbereich 43 aufweist. Dabei sind die Einlassöffnung 34 an dem Einlassbereich 43 und die Auslassöffnung 36 an dem zylindrischen Teil 42 rechtwinklig zueinander ausgebildet, sodass ein durch das Sorptionsmodul 30 geführter Gasstrom zwischen der Einlassöffnung 34 und der Auslassöffnung 36 um 90° umgelenkt wird.

In Figur 3d ist ein Sorptionsmodul 30 dargestellt, welches ein Gehäuse 32 mit einem zylindrischen Teil 42 sowie einem dem zylindrischen Teil 42 vorgeschalteten Einlassbereich 43 und einem dem zylindrischen Teil 42 nachgeschalteten Auslassbereich 44 aufweist. Dabei sind die Einlassöffnung 34 an dem Einlassbereich 43 und die Auslassöffnung 36 an dem Auslassbereich 44 um 180° gedreht zueinander ausgebildet, sodass ein durch das Sorptionsmodul 30 geführter Gasstrom zwischen der Einlassöffnung 34 und dem zylindrischen Bereich 42 um 90° und zwischen dem zylindrischen Bereich und der Auslassöffnung 36 an dem Auslassbereich 44 nochmals um 90° umgelenkt wird.

In Figur 3e ist ein weiteres Ausführungsbeispiel für ein erfindungsgemäßes Sorptionsmodul 30 dargestellt, welches ein Gehäuse 32 mit einem zylindrischen Teil 42 sowie einem dem zylindrischen Teil 42 vorgeschalteten Einlassbereich 43 und einem dem zylindrischen Teil 42 nachgeschalteten Auslassbereich 44 aufweist. Dabei ist die Einlassöffnung 34 an dem Einlassbereich 43 und die Auslassöffnung 36 an dem Auslassbereich 44 diagonal versetzt zueinander ausgebildet, sodass ein durch das Sorptionsmodul 30 geführter Gasstrom zwischen der Einlassöffnung 34 und der Auslassöffnung 36 diagonal durch den zylindrischen Bereich 42 geführt und dabei entsprechend umgelenkt wird.

In Figur 3f ist ein weiteres Ausführungsbeispiel für ein erfindungsgemäßes Sorptionsmodul 30 dargestellt, bei welchem eine Einlassöffnung 34 an einer ersten Stirnfläche 86 eines zylindrischen Gehäuses 32 und eine Auslassöffnung 36 an einer zweiten, der ersten Stirnfläche 86 gegenüberliegenden Stirnfläche 88 ausgebildet ist. Dabei wird das zylindrische Gehäuse 32 in Längsrichtung durchströmt.

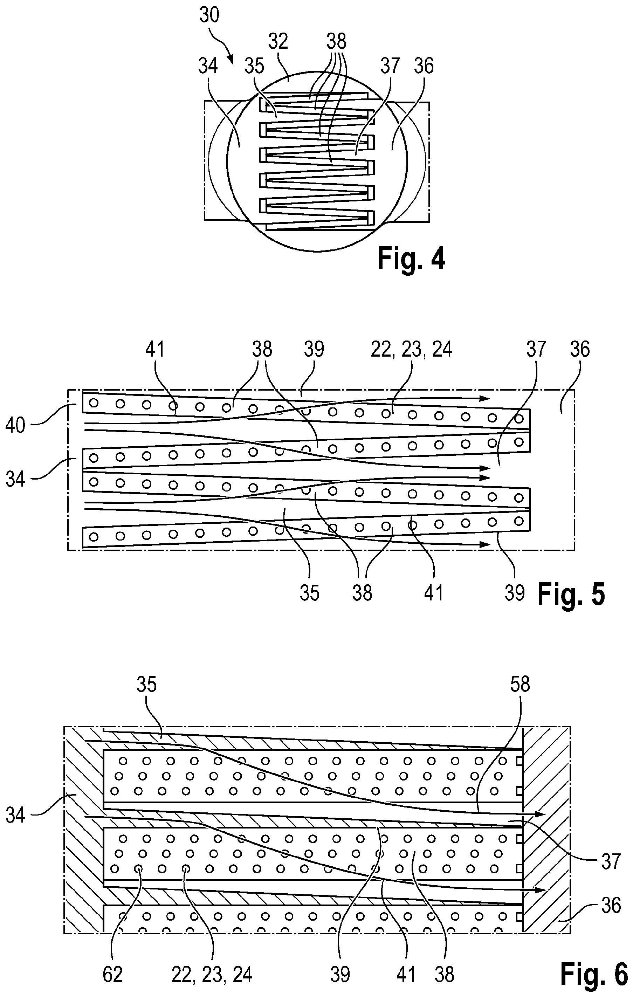

Figur 4 zeigt einen Schnitt durch ein erfindungsgemäßes Sorptionsmodul 32. Das Sorptionsmodul 30 weist ein zylindrisches Gehäuse 32 auf, an welchem eine Einlassöffnung 34 und eine Auslassöffnung 36 ausgebildet sind. In dem zylindrischen Gehäuse 32 ist ein Prozessraum 28 ausgebildet, in welchem ein Sorbentbettträger 40 angeordnet ist, welcher eine Mehrzahl von Sorbentbetten 38 trägt. Dabei erstrecken sich ausgehend von der Einlassöffnung 34 in Richtung der Auslassöffnung 36 zwischen den Sorbentbetten 38 ausgebildete Einlasskanäle 35 durch welche ein Gasstrom geführt wird, welcher durch ein Sorbentbett 38 durchtritt und dann durch einen Auslasskanal 37, welcher fluidisch mit der Auslassöffnung 36 verbunden ist, wieder abströmt. Dabei wird beim Durchtritt durch das Sorbentbett 38 das im Gasstrom enthaltene Kohlenstoffdioxid in dem Sorbentmaterial 22 des Sorbentbetts 38 gebunden.

Figur 5 zeigt ein bevorzugtes Ausführungsbeispiel für einen Sorbentbettträger 40 mit mehreren Sorbentbetten 38 sowie Einlass- und Auslasskanälen 35, 37, welche zwischen den Sorbentbetten 38 ausgebildet sind. Dabei verjüngen sich die Einlasskanäle 35 in Strömungsrichtung, da der Gasstrom gleichmäßig durch das Sorbentmaterial 22 in den Sorbentbetten 38 geführt werden soll und dazu im hinteren Bereich eine geringere Höhe des Einlasskanals 35 benötigt wird. Ein durch den Einlasskanal 35 zugeführter Gasstrom wird aufgeteilt und jeweils anteilig durch eines der Sorbentbetten 38 geführt. Dabei werden die in dem Sorbentbettträger 40 gestapelten Sorbentbetten 38 abwechseln von oben nach unten und von unten nach oben durchströmt. Die Sorbentbetten 38 sind in diesem Ausführungsbeispiel leicht schräg mit einem geringen Winkel von 1 bis 5° zur Horizontalen, beziehungsweise von 2 bis 10° zu dem jeweils benachbarten Sorbentbett 38 angeordnet, sodass sich die Einlasskanäle 35 konstruktivbedingt in Strömungsrichtung verjüngen. Zusätzlich ist vorgesehen sein, dass die Einlasskanäle an ihrem der Auslassöffnung zugewandten Ende vollständig verschlossen sind, um einen Durchtritt des Gasstroms durch die Sorbentbetten 38 zu begünstigen beziehungsweise zu erzwingen. Es werden keine zusätzlichen Trennwände benötigt.

Figur 6 zeigt ein weiteres bevorzugtes Ausführungsbeispiel für einen Sorbentbettträger 40 mit mehreren Sorbentbetten 38 sowie Einlass- und Auslasskanälen 35, 37, welche zwischen den Sorbentbetten 38 ausgebildet sind. Dabei verjüngen sich die Einlasskanäle 35 in Strömungsrichtung, da der Gasstrom gleichmäßig durch das Sorbentmaterial 22 in den Sorbentbetten 38 geführt werden soll und dazu im hinteren Bereich eine geringere Höhe des Einlasskanals 35 benötigt wird. In dem in Figur 6 dargestellten Ausführungsbeispiel sind die Sorbentbetten 38 horizontal ausgerichtet. Der Zwischenraum zwischen zwei Sorbentbetten 38 enthält jeweils einen Einlasskanal 35 und einen Auslasskanal 37, die durch ein Trennblech voneinander getrennt sind.

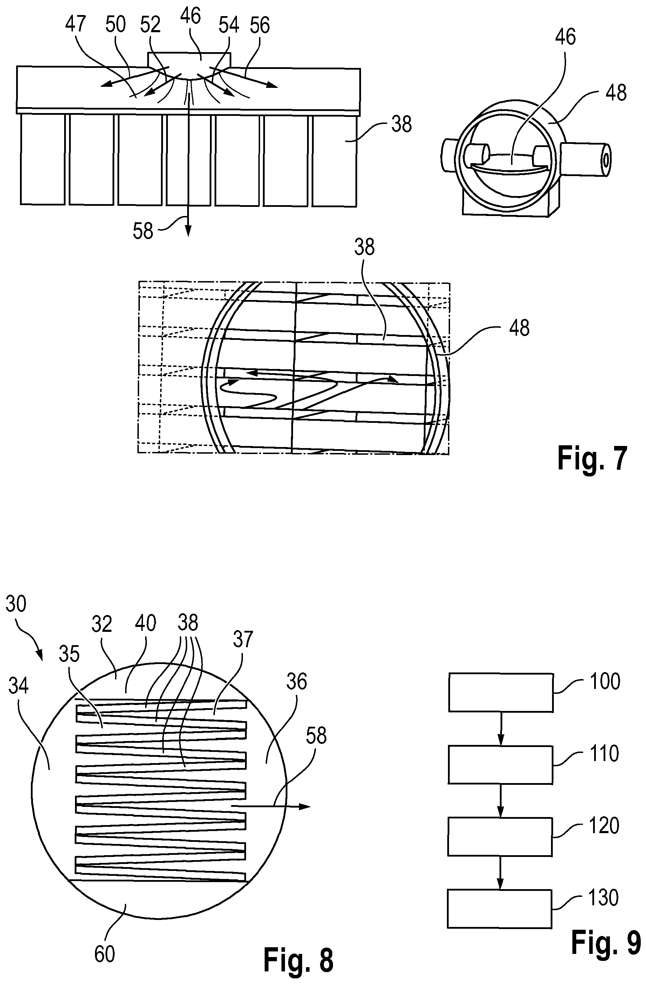

In Figur 7 ist eine Einlassöffnung 34 mit einer schematische Darstellung eines Klappenträgers 48 mit einer Verschlussklappe 46 dargestellt. Zusätzlich kann zur Verteilung des Gasstroms innerhalb des Sorptionsmoduls 30 ein Strömungsumlenkelement 47 vorhanden sein, welches die Umlenkung bzw. Aufteilung des durch den Klappenträger 48 und die geöffnete Verschlussklappe 46 eintretenden Gasstroms unterstützt, um eine noch gleichmäßigere Durchströmung der Sorbentbetten des Sorptionsmoduls 30 zu erreichen und die Strömungsverluste zu reduzieren. Das Strömungsumlenkelement 47 ist dazu eingerichtet möglichst sämtliche Sorbentbetten 38 über die komplette Länge des Sorptionsmoduls 30 gleichmäßig anzuströmen und somit eine möglichst effiziente Adsorption von Kohlenstoffdioxid aus dem Gasstrom sicherzustellen. Dabei sind das Strömungsumlenkelement 47 und die Einlassöffnung 34 möglichst mittig an einer ersten Seite 82 einer Mantelfläche 80 des Gehäuses 32 des Sorptionsmoduls angeordnet beziehungsweise ausgebildet. Dadurch kann der Gasstrom ausgehend von der Einlassöffnung gleichmäßig über die Länge des Sorptionsmoduls 30 aufgeteilt werden. Alternativ können auch zwei Einlassöffnungen 34 vorgesehen werden, wobei durch mehr Einlassöffnungen der konstruktive Aufwand zur Abdichtung des Sorptionsmoduls 30 steigt. Dabei sind die Einlassöffnungen 34 idealerweise in Zylinderlängsrichtung miteinander verbunden, da sich die Strömung bei einer solchen Verbindung noch besser im Sorptionsmodul 30 verteilen kann und die Sorbentbetten 38 noch gleichmäßiger durchströmt werden.

In Figur 8 ist ein Sorbentbettträger 40 mit mehreren Sorbentbetten 38 dargestellt. Um eine möglichst homogene Durchströmung der Sorbentbetten 38 zu erreichen, ist eine Höhe des Sorbentbettträgers 40 vorgesehen, welche dem einfachen bis zweifachen, bevorzugt dem 1,2-fachen bis 1,8-fachen, besonders bevorzugt dem 1,3-fachen bis 1,7-fachen der Breite des Sorbentbettträgers 40 entspricht. Bei einem solchen Verhältnis von Höhe zu Breite des Sorbentbettträgers 40 stellen sich besonders günstige Strömungsverhältnisse in Hinblick auf die Homogenität der Durchströmung der Sorbentbetten 38 sowie den Druckverlust beziehungsweise Strömungswiderstand bei der Durchströmung des Sorptionsmoduls ein. Vorzugsweise erfolgt eine Abdichtung zwischen Einlassseite und Auslassseite an dem auslassseitigen Ende des Sorbentbettträgers 40 beziehungsweise dem der Auslassseite zugewandten Ende der Sorbentbetten 38, sodass die Einlasskanäle in Zylinderlängsrichtung verbunden werden können. Dies begünstigt die gleichmäßige Durchströmung aller Sorbentbetten 38.

In Figur 9 ist ein Ablaufdiagramm zur Durchführung eines Verfahrens zur Abtrennung von Kohlenstoffdioxid aus einem Gasstrom, insbesondere eines Luftstroms, dargestellt.

In einem ersten Verfahrensschritt <100> wird eine Einlassöffnung 34 und eine Auslassöffnung 36 des Gehäuses 32 des Sorptionsmoduls geöffnet. In einem Verfahrensschritt <110> wird ein Gasstrom durch die Einlassöffnung 34 in das Gehäuse 32 des Sorptionsmodul 30 eingeleitet, wobei das im Gasstrom enthaltene Kohlenstoffdioxid in dem Sorbentmaterial 22 des Sorptionsmoduls 34 adsorbiert wird, bevor das restliche Gas das Sorptionsmodul 34 durch die geöffnete Auslassöffnung 36 verlässt. In einem Verfahrensschritt <120> werden die Verschlussklappen 46, 64 geschlossen und die Einlassöffnungen 34 sowie Auslassöffnungen 36 im Gehäuse 32 des Sorptionsmoduls 30 verschlossen. In einem Verfahrensschritt <130> wird das Sorptionsmodul 30 aufgeheizt und vorzugsweise der Druck im Sorptionsmodul 30 reduziert, um das bei der Adsorption im Sorbentmaterial 22 gebundene Kohlenstoffdioxid wieder zu desorbieren.

### Bezugszeichenliste

- 10: Anlage zur Abtrennung von Kohlenstoffdioxid
- 11: Vorkonditionierungseinheit
- 12: Trocknungseinheit
- 14: Sorptionseinheit
- 16: Speichereinheit
- 18: Förderelement

- 20: Gebläse
- 22: Sorbentmaterial
- 23: Physisorbent
- 24: Zeolith
- 26: erster Prozessraum
- 28: zweiter Prozessraum

- 30: Sorptionsmodul
- 32: Gehäuse
- 34: Einlassöffnung
- 35: Einlasskanal
- 36: Auslassöffnung
- 37: Auslasskanal
- 38: Sorbentbett
- 39: Oberseite

- 40: Sorbentbettträger
- 41: Unterseite
- 42: erste Zylinderseite
- 43: Einlassbereich
- 44: Auslassbereich
- 46: Verschlussklappe
- 47: Strömungsumlenkelement
- 48: Klappenträger

- 50: Strömungspfeil
- 52: Strömungspfeil
- 54: Strömungspfeil
- 56: Strömungspfeil
- 58: Strömungsrichtung

- 60: Füllelemente
- 62: Kugeln (des Sorbentmaterials)
- 64: Auslassklappe
- 66: Dichtelement
- 68: Unterdruckpumpe

- 70: Heizelement
- 72: Temperatursensor
- 74: Drucksensor
- 76: Sensor zur Erfassung der Kohlenstoffdioxidkonzentration
- 78: Sensor zur Erfassung der Strömungsgeschwindigkeit
- 79: Luftfeuchtigkeitssensor

- 80: Mantelfläche
- 82: erste Seite der Mantelfläche
- 84: zweite Seite der Mantelfläche
- 86: erste Stirnfläche
- 88: zweite Stirnfläche

- 90: Steuergerät
- 92: Speichereinheit
- 94: Recheneinheit
- 96: Computerprogrammcode

## Patentansprüche

1. Sorptionsmodul (30) zur Sorption von Kohlenstoffdioxid aus der Umgebungsluft, umfassend:
- ein Gehäuse (32) mit mindestens einer Einlassöffnung (34) und mindestens einer Auslassöffnung (36),
- ein in dem Gehäuse (32) angeordneten Sorbentbettträger (40), welcher mehrere mit einem Sorbentmaterial (22) gefüllte Sorbentbetten (38) trägt,
- sowie Verschlussklappen (46) zum Verließen der mindestens einen Einlassöffnung (34) und der mindestens einen Auslassöffnung (36) im Gehäuse (32) des Sorptionsmoduls (30).

2. Sorptionsmodul (30) nach Anspruch 1, wobei das Gehäuse (32) als zylindrisches Gehäuse (33) ausgeführt ist.

3. Sorptionsmodul (30) nach Anspruch 2, wobei das zylindrische Gehäuse (33) ein Verhältnis von Länge zu Durchmesser im Bereich von 1,5 zu 1 bis 3 zu 1 aufweist.

4. Sorptionsmodul (30) nach einem der Ansprüche 1 bis 3, wobei die Einlassöffnung (34) an einer ersten Seite (82) einer Mantelfläche (80) und die Auslassöffnung (36) an einer gegenüberliegenden zweiten Seite (84) der Mantelfläche (80) angeordnet ist.

5. Sorptionsmodul (30) nach einem der Ansprüche 1 bis 4, wobei das Sorptionsmodul (30) ein Strömungsumlenkelement (47) zur Manipulation eines Gasstroms durch das Sorptionsmodul (30) umfasst, wobei das Strömungsumlenkelement (47) dazu eingerichtet ist, die Anströmung der unterschiedlichen Sorbentbetten (38) in dem Sorptionsmodul (30) zu homogenisieren.

6. Sorptionsmodul (30) nach Anspruch 5, wobei das Strömungsumlenkelement (47) einen Klappenträger (48) mit mindestens einer Klappe (46) zur Steuerung eines Luftstroms durch das Sorptionsmodul (30) aufweist.

7. Sorptionsmodul (30) nach einem der Ansprüche 1 bis 6, wobei zwischen den Sorbentbetten (38) mit der Einlassöffnung (34) fluidisch verbundenen Einlasskanäle (35) ausgebildet sind, welche sich in Strömungsrichtung ausgehend von der Einlassöffnung (34) in Richtung der Auslassöffnung (36) verjüngen.

8. Sorptionsmodul (30) nach einem der Ansprüche 1 bis 7, wobei zwei vertikal benachbarte Sorbentbetten (38) parallel zueinander angeordnet sind.

9. Sorptionsmodul (30) nach einem der Ansprüche 1 bis 7, wobei zwei vertikal benachbarte Sorbentbetten (38) in einem Winkel von 2 ° bis 10 ° zueinander geneigt sind.

10. Sorptionsmodul (30) nach einem der Ansprüche 1 bis 9, wobei in einem Randbereich des Gehäuses (30) ein Füllelement (60) angeordnet ist.

11. Sorptionsmodul (30) nach einem der Ansprüche 1 bis 10, wobei der Sorbentbettträger (40) eine Höhe aufweist, welche dem einfachen bis zweifachen seiner Breite entspricht.

12. Sorptionsmodul (30) nach einem der Ansprüche 1 bis 11, wobei das Sorbentmaterial (22) kugelförmig ist und als Schüttung in den Sorbentbetten (38) vorliegt.

13. Anlage (10) zur Abtrennung von Kohlenstoffdioxid aus der Umgebungsluft, umfassend eine Trocknungseinheit (12), eine Sorptionseinheit (14), sowie ein Förderelement zur Förderung eines Luftstroms durch die Anlage (10), wobei die Sorptionseinheit (14) ein oder mehrere Sorptionsmodule (30) nach einem der Ansprüche 1 bis 12 aufweist.

14. Verfahren zur Abtrennung von Kohlenstoffdioxid aus der Umgebungsluft mit einem Sorptionsmodul (30) nach einem der Ansprüche 1 bis 12, umfassend folgende Schritte:
- Leiten eines Gasstroms durch eine Einlassöffnung (34) in das Gehäuse (32) des Sorptionsmodul (34),
- Adsorbieren des in dem Gasstrom enthaltenen Kohlenstoffdioxids,
- Schließen der Verschlussklappen (46, 64) im Gehäuse (32) des Sorptionsmoduls (30), und
- Desorbieren des in dem Sorbentmaterial (22) gebundenen Kohlenstoffdioxids.

15. Verfahren zur Abtrennung von Kohlenstoffdioxid aus der Umgebungsluft nach Anspruch 14, wobei ein Gasstrom von einer Unterseite (41) zu einer Oberseite (39) oder von einer Oberseite (39) zu einer Unterseite (41) durch ein Sorbentbett (38) geleitet wird.
